# FASCICULE DE BREVET EUROPEEN

(11) **EP 1 184 085 B1**
(45) Date de publication et mention de la délivrance du brevet: **17.05.2006**
(21) Numéro de dépôt: 01120675.2
(22) Date de dépôt: 03.09.2001
(51) Int. Cl.: B05B 7/26, B05B 7/30, A01C 23/04

(54) **Dispositif de pulvérisation, notamment à usage agricole**
Zerstäubungsanordnung insbesondere für die landwirtschaftliche Verwendung
Spraying device especially for agricultural use

(30) Priorité: 01.09.2000 FR 0011180
(43) Date de publication de la demande: 06.03.2002
(73) Titulaire: Proharam, René, 31830 Plaisance du Touch (FR)
(72) Inventeur: Proharam, René, 31830 Plaisance du Touch (FR)
(74) Mandataire: Santarelli

(56) Documents cités:
- WO-A-89/10050
- WO-A-99/39834
- US-A- 4 121 767

## Description

La présente invention concerne un dispositif de pulvérisation, notamment à usage agricole.

Pour le traitement des cultures, il est connu d'utiliser un pulvérisateur monté à l'arrière d'un tracteur. Un tel pulvérisateur comporte une cuve et une rampe de pulvérisation. Une pompe est utilisée pour mettre le produit sortant de la cuve sous pression et l'envoyer vers la rampe de pulvérisation.

Habituellement, la cuve contient de l'eau dans laquelle sont dilués des produits chimiques concentrés. Ceci présente plusieurs inconvénients. Lorsque le contenu de la cuve n'est pas entièrement utilisé au cours d'une pulvérisation, il faut vider cette cuve et mettre en oeuvre une procédure particulière car les produits utilisés ne peuvent être mis à l'égout. Cette procédure est fastidieuse et mène à la perte du produit qui se trouvait dans la cuve et qui n'a pas été utilisé. De plus, avant de réutiliser la cuve, il faut la nettoyer conformément aux normes européennes en vigueur. Ici aussi, le nettoyage doit être réalisé selon une procédure particulière prévoyant le retraitement de l'eau de rinçage.

Les pulvérisateurs classiques ne prévoient pas la possibilité de changer de produit, d'inhiber un produit ou d'ajouter un nouveau produit une fois que le mélange a été réalisé dans la cuve. Il faut donc prévoir au moment du remplissage de la cuve pour quelle application précise le produit mis dans la cuve va être utilisé.

Pour remédier en partie à ces inconvénients, il est déjà connu d'utiliser des systèmes appelés à injection directe. On a alors une cuve d'eau ainsi que des cuves, de taille bien plus petite, contenant des produits chimiques concentrés. De l'eau est alors pompée dans la grande cuve et sur la conduite entre la pompe et la rampe de pulvérisation on vient injecter sous pression à l'aide de pompes les produits nécessaires pour le traitement envisagé. Le document WO-97/02898 révèle un tel dispositif. Ce dernier présente l'inconvénient d'être difficilement adaptable sur un pulvérisateur existant et fait appel à des techniques complexes s'appuyant sur des doseurs constitués de pompes à membrane associés à de l'électronique de contrôle et de régulation.

Il est également connu d'avoir un système à injection directe intégrant des pompes doseuses se plaçant après la pompe principale du pulvérisateur et fonctionnant grâce à la pression fournie par celle-ci. Cette solution manque de fiabilité et est difficilement adaptable sur tout type de pulvérisateur. En plus, elle n'offre aucune souplesse d'utilisation et ne peut être fiablement automatisée afin de programmer à distance la quantité de produit à doser.

Un autre inconvénient des systèmes de pulvérisation à injection directe connus, est que ceux-ci conduisent à des pertes de charge importantes entre la pompe et la rampe de pulvérisation. De ce fait, pour bénéficier d'une pression acceptable au niveau de la rampe de pulvérisation, il n'est pas possible de doser de nombreux produits. Dans la pratique, on se limite généralement à deux produits.

Le dosage des produits dans ces systèmes est difficile lorsque des faibles débits sont demandés. Dans ces cas là, la pression de la pompe doseuse n'est pas constante et il est difficile alors de réguler le débit.

Le document WO-89/10050 décrit un dispositif de pulvérisation comportant une ligne d'injection reliée à des réservoirs de produits chimiques et intégrée dans un circuit fermé dans lequel se trouvent également une pompe et un système de répartition. Un point de jonction permet l'introduction dans le circuit fermé d'un liquide de base.

Le document WO-99/39834 décrit un dispositif de pulvérisation dans lequel un (ou plusieurs) produit chimique est injecté dans une bouillie de pulvérisation. Ce dispositif comporte une pompe présentant un orifice d'entrée et un orifice de sortie ainsi qu'un tuyau en boucle reliant l'entrée de la pompe à sa sortie. Le produit chimique est introduit dans la bouillie de pulvérisation au niveau de la boucle à l'aide d'un système de type venturi.

Les pulvérisateurs connus évoqués ci-dessus sont habituellement complexes et le rinçage des canalisations est long et fastidieux. Les temps nécessaires à l'entretien de ces dispositifs sont donc importants. En outre, pour installer et régler le pulvérisateur, il faut un temps très important.

Un autre inconvénient de ces systèmes connus est que les pompes ou venturis qu'ils mettent en oeuvre ne permettent pas l'injection de produits très visqueux. Lorsque de tels produits doivent être pulvérisés, ils sont alors directement mélangés dans la cuve d'eau, ce qui entraîne les problèmes évoqués plus haut.

La présente invention a alors pour but de fournir un pulvérisateur de conception aussi simple que possible permettant de réaliser un dosage de produit chimique sans pollution du produit porteur constitué généralement par de l'eau. Avantageusement, ce pulvérisateur permettra aussi l'utilisation de produits visqueux sans avoir à les mélanger directement dans la cuve principale. Ce pulvérisateur permettra aussi de préférence de pouvoir réaliser un dosage précis du produit chimique.

A cet effet, elle propose un dispositif de pulvérisation comportant une cuve principale de produit porteur, au moins une cuve de produit chimique destiné à être mélangé au produit porteur, une rampe de pulvérisation ou similaire ainsi qu'une pompe placée en aval de la cuve principale permettant d'envoyer sous pression du produit porteur de la cuve principale vers la rampe de pulvérisation ou similaire.

Selon l'invention, des moyens sont prévus pour créer une dépression calibrée entre la sortie de la cuve principale de produit porteur et l'entrée de la pompe et chaque cuve de produit chimique est connectée sur une ligne d'injection se trouvant entre la cuve principale de produit porteur et la pompe par l'intermédiaire de moyens permettant l'injection dans cette ligne du produit chimique se trouvant dans la cuve de produit chimique correspondante.

De cette manière, le dosage du (ou des) produit(s) chimique(s) à doser se réalise par dépression. Le produit est ainsi aspiré vers la ligne d'injection et il devient inutile de prévoir une pompe supplémentaire pour venir injecter du produit dans une conduite où circule un produit (fluide) porteur.

La dépression créée est calibrée. Cette dépression n'est pas forcément fixe mais est en permanence connue, par exemple en fonction du débit de fluide porteur.

Les moyens prévus pour créer une dépression comportent par exemple un clapet anti-retour mais tout autre moyen permettant de créer une dépression peut être utilisé ici.

Dans le dispositif de pulvérisation selon l'invention, les moyens prévus pour injecter le produit chimique dans la ligne d'injection présentent de préférence une sortie par laquelle sort par intermittence du produit chimique pur. De cette manière, il est possible de réaliser un dosage précis du produit chimique qui doit être pulvérisé.

Dans une forme de réalisation, le dispositif de pulvérisation comporte un réseau hydraulique présentant deux branches parallèles entre la cuve principale de produit porteur et la pompe, une première branche intégrant les moyens permettant de créer la dépression calibrée et la seconde branche étant la ligne d'injection.

Dans ce cas, l'extrémité aval de la ligne d'injection est avantageusement reliée à l'extrémité aval de la première branche par deux injecteurs montés en parallèle, l'un des injecteurs étant un injecteur possédant un orifice calibré. Il est alors possible de calculer en permanence le temps d'ouverture des injecteurs de produit et de tenir compte de la viscosité changeante des produits à pulvériser.

Une variante de réalisation préférée d'un dispositif de pulvérisation selon l'invention prévoit qu'il comporte un réseau hydraulique présentant deux branches parallèles entre la cuve principale de produit porteur et la pompe, que la première branche intègre les moyens permettant de créer la dépression calibrée, que les moyens permettant l'injection de produit chimique se présentent à chaque fois sous la forme d'une vanne à deux entrées et une sortie, qu'une entrée de chaque vanne est reliée au point amont de la seconde branche, que la seconde entrée de chaque vanne est reliée à une cuve de produit chimique correspondante, que la sortie de chaque vanne est reliée au point aval de la seconde branche et que la vanne est telle qu'elle laisse soit passer du fluide porteur, soit du produit chimique sans réaliser de mélange de ces produits.

De préférence, le dispositif de pulvérisation comporte un dispositif de rinçage intégré comportant par exemple une cuve de rinçage munie d'une vanne de rinçage et reliée d'une part à l'aval de la pompe entre celle-ci et la rampe de pulvérisation, et à chaque cuve de produit chimique et d'autre part à la ligne d'injection par l'intermédiaire d'un injecteur.

Pour garantir un bon mélange de la solution pulvérisée, au moins un homogénéisateur statique est avantageusement prévu en aval de la pompe.

Pour connaître le débit de produit porteur, un débitmètre peut être prévu à la sortie de la cuve principale.

Afin de mieux connaître le débit des produits chimiques injectés, la ligne d'injection est avantageusement équipée d'un capteur de pression. De préférence, cette ligne d'injection est inclinée sur l'horizontale.

Pour réaliser la gestion du dispositif de pulvérisation, les moyens permettant l'injection de produit chimique dans la ligne d'injection, d'éventuels capteurs et vannes sont par exemple reliés à un boîtier électronique qui gère l'ouverture et la fermeture des moyens d'injections et d'éventuelles vannes en fonctions des informations reçues d'une part par les éventuels capteurs et d'autre part par un utilisateur.

Les caractéristiques et avantages de l'invention ressortiront d'ailleurs de la description qui va suivre à titre d'exemple, en référence au dessin schématique annexé sur lequel :
Figure 1 montre schématiquement une première forme de réalisation d'un pulvérisateur selon l'invention, et
Figure 2 montre une variante de réalisation du pulvérisateur de la figure 1.

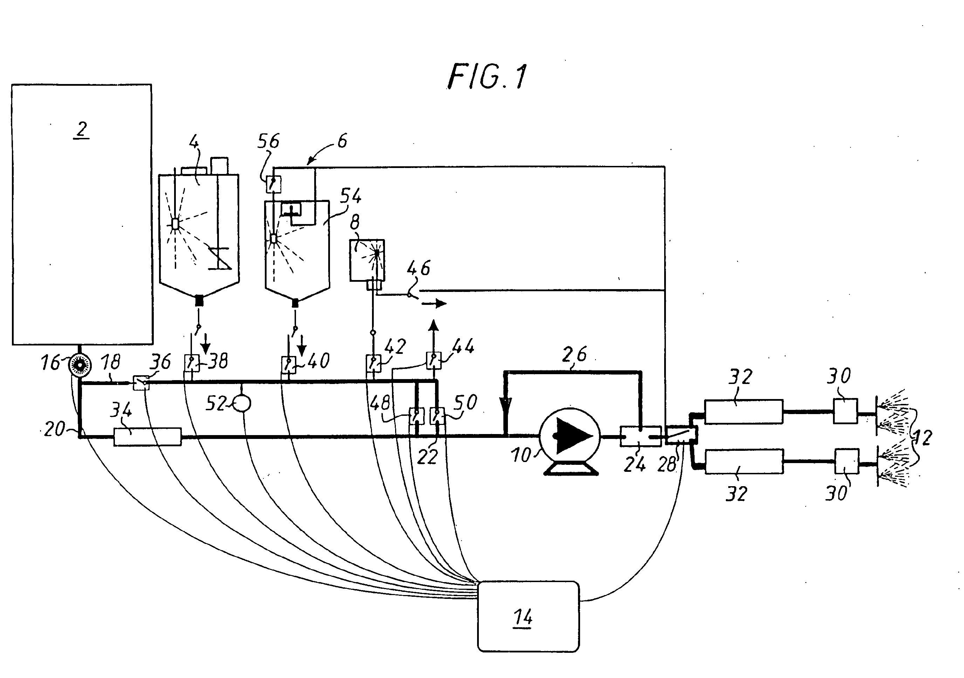

Sur la figure 1, sont représentés notamment une cuve principale 2, une cuve secondaire 4, un dispositif de rinçage 6, un emballage 8 contenant un produit chimique à pulvériser, une pompe 10 ainsi qu'une rampe de pulvérisation 12. Un boîtier électronique 14 destiné à gérer le pulvérisateur est représenté schématiquement sur cette figure.

Un débitmètre 16 est disposé juste en aval de la cuve principale 2. Cette dernière est destinée à être remplie d'un fluide porteur qui est le plus souvent de l'eau. Il sera supposé dans la suite de la description que ce fluide est de l'eau. Le débitmètre 16 permet de connaître la quantité d'eau consommée. Ce débitmètre est optionnel et on peut envisager de le placer à un autre endroit du pulvérisateur, par exemple avant la rampe de pulvérisation 12. Dans ce dernier cas, ce débitmètre permet alors de connaître la quantité de solution pulvérisée. Si l'on connaît la quantité de produit injecté dans l'eau, il est équivalent de connaître la quantité d'eau consommée ou la quantité de solution pulvérisée.

En aval du débitmètre 16, le circuit hydraulique du pulvérisateur représenté au dessin comporte une dérivation en aval de laquelle se trouvent deux branches. Une première branche sera appelée par la suite ligne d'injection 18 tandis que la seconde branche sera appelée par la suite ligne de perte de charge 20. La ligne d'injection 18 et la ligne de perte de charge 20 se rejoignent en un point 22 qui est le point de jonction aval des lignes 18 et 20. Ce dernier se trouve en amont de la pompe 10. La ligne d'injection 18 est de préférence inclinée sur l'horizontale.

En aval de cette pompe 10, se trouve un dispositif de régulation de pression 24 qui envoie la solution pompée par la pompe 10 soit vers la rampe de pulvérisation 12 soit dans une conduite de retour 26 qui mène éventuellement une partie de la solution pompée en amont de la pompe 10, entre l'entrée de celle-ci et le point de jonction 22.

En aval du dispositif régulateur de pression 24, en direction de la rampe de pulvérisation 12, se trouve un aiguillage 28 qui permet d'envoyer la solution soit dans toute la rampe de pulvérisation 12 soit uniquement vers un tronçon de rampe 30. Avant chaque tronçon de rampe 30 et après l'aiguillage 28 se trouve à chaque fois un dispositif homogénéisateur statique 32.

Sur la ligne de perte de charge 20 se trouve uniquement une charge permettant de créer une dépression calibrée de l'ordre de quelques dixièmes de bar entre la sortie de la cuve principale 2 et l'entrée de la pompe 10. Cette charge est par exemple constituée par un clapet anti-retour 34, mais elle peut aussi être constituée par un gicleur, un filtre ou autre. La dépression créée n'est pas forcément constante mais ses variations, par exemple en fonction du débit mesuré par le débitmètre 16 sont connues.

De la sorte, une dépression calibrée est créée entre le débitmètre 16 et la pompe 10. Elle se retrouve également dans la ligne d'injection 18. A l'entrée de cette ligne d'injection 18, c'est-à-dire du côté du débitmètre 16, se trouve tout d'abord un injecteur 36 pour l'eau de la cuve 2. En aval de cet injecteur 36, toujours sur la ligne d'injection 18, viennent se connecter quatre injecteurs 38, 40, 42, 44.

Le nombre d'injecteurs disposés sur cette ligne d'injection détermine le nombre de produits distincts pouvant être injectés dans l'eau circulant entre la cuve principale 2 et la rampe de pulvérisation 12.

Sur la figure 1, le premier injecteur 38 après l'injecteur 36 pour l'eau, permet l'injection dans la ligne d'injection 18 du produit se trouvant dans la cuve secondaire 4. Il s'agit là d'un produit phytosanitaire. La cuve 4 est une cuve classique telle que l'on en trouve actuellement sur les systèmes de pulvérisation à injection directe. Une telle cuve est connue de l'homme du métier et n'est donc pas décrite dans le détail ici.

Le second injecteur 40 est relié au dispositif de rinçage 6 dont le fonctionnement est décrit plus loin.

Le troisième injecteur 42 est raccordé à un emballage 8. Il s'agit d'un emballage d'origine d'un produit phytosanitaire concentré. Un bouchon à deux sorties permet à l'utilisateur de n'avoir aucun contact avec le produit contenu dans l'emballage 8. Ce bouchon comporte un dispositif de connexion rapide avec un obturateur permettant de positionner l'emballage de produit concentré, bouchon vers le bas, lors de la pulvérisation. Ceci permet de s'affranchir des problèmes dus aux secousses ainsi que de vider entièrement l'emballage 8.

Ce bouchon est un bouchon conique sur lequel est fixé un joint résistant au produit contenu dans l'emballage 8 et réalisant l'étanchéité. Ce bouchon est par exemple maintenu sur l'emballage 8 par une sangle élastique ou une sangle ajustable s'accrochant sur deux oreilles placées au haut du bouchon. Un coupleur à attache rapide avec obturateur pour aspirer les produits ainsi qu'un tuyau allant au fond du bidon traversent le bouchon. Le tuyau allant au fond du bidon est surmonté d'une buse rotative à 360° permettant une prise d'air durant la pulvérisation et le rinçage à l'eau claire de l'emballage 8 en fin de pulvérisation. Ce tuyau peut être terminé, à l'extérieur, par un coupleur à attache rapide 46 pour connecter l'arrivée d'eau de rinçage.

Le quatrième injecteur 44 est destiné à permettre l'introduction d'air à la pression atmosphérique dans la ligne d'injection 18.

Chacun des injecteurs 36 à 44 est constitué de telle sorte qu'il est soit complètement ouvert soit complètement fermé. La quantité de produit chimique passant par chacun de ces injecteurs dépend donc du temps d'ouverture de l'injecteur correspondant. Ainsi, si l'injecteur est ouvert à intervalles réguliers, étant donné que la dépression en sortie d'injecteur est connue, on connaît alors le débit de produit chimique passant par l'injecteur correspondant. Ce débit de produit chimique dépend notamment de la viscosité du produit chimique, qui dépend elle-même de la température, et bien entendu de l'injecteur.

La ligne d'injection 18 se termine par deux branches parallèles reliant chacune le point de jonction 22 avec la ligne de perte de charge 20. Chacune de ces branches comportent un injecteur 48, 50. L'injecteur 48 d'une première branche est un injecteur classique tandis que le second injecteur 50 possède un orifice calibré qui permet de calculer en permanence le temps d'ouverture des injecteurs de produit et permet ainsi de tenir compte de la viscosité changeante dans le temps des produits à pulvériser.

Enfin, sur la ligne d'injection 18, se trouve un capteur de pression 52 permettant de connaître constamment la pression régnant dans la ligne d'injection 18.

Comme schématisé sur l'unique figure, le boîtier électronique 14 destiné à gérer le fonctionnement de l'ensemble du pulvérisateur est relié à chacun des injecteurs ainsi qu'à l'aiguillage 28, au débitmètre 16 et au capteur de pression 52. Ainsi, le pulvérisateur décrit ci-dessus utilise la dépression engendrée par la pompe 10 pour réaliser l'injection des produits à mélanger à l'eau pour obtenir la solution à pulvériser. La technique utilisée permet de ne pas employer de pompe autre que la pompe principale 10. Elle permet en outre de s'affranchir des pressions plus ou moins élevées engendrées par la pompe 10 tout en respectant la sécurité inhérente à l'utilisation des produits phytosanitaires généralement utilisés, c'est-à-dire qu'aucune anomalie ne peut mettre sous pression les cuves, ou emballages, contenant les produits phytosanitaire purs. De plus, la technique mise en oeuvre permet d'automatiser simplement le rinçage des cuves ou des emballages de produits phytosanitaires et il est possible d'effectuer efficacement et rapidement l'épandage des eaux de rinçage sur les aires de pulvérisation des produits phytosanitaires.

Le boîtier électronique 14 intègre un microprocesseur permettant d'ouvrir tour à tour ou simultanément l'ensemble des injecteurs d'eau 36 et de produit 38, 40, 42 afin de constituer un mélange adéquat. Un algorithme permet de calibrer en permanence le temps d'ouverture des injecteurs et d'autotester le bon fonctionnement des injecteurs par analyse de la pression qui s'établit dans la ligne d'injection 18 en fonction de l'ouverture des injecteurs.

Le boîtier électronique 14 comporte également une interface de communication avec l'utilisateur. On peut prévoir à cet effet la présence d'un clavier et d'un afficheur non représentés. L'utilisateur peut alors programmer par exemple la quantité de produit à pulvériser à l'hectare. Il peut également choisir les produits qu'il souhaite ajouter à la solution. Il est possible de choisir d'utiliser un produit sur une partie seulement du champ à traiter.

Le boîtier électronique 14 peut également contenir un système d'alarme permettant de mettre en garde sur les défauts de fonctionnement pendant la pulvérisation. Ainsi, il est possible de signaler qu'une cuve est vide, qu'un injecteur est défectueux ou qu'il y a un problème avec la pompe.

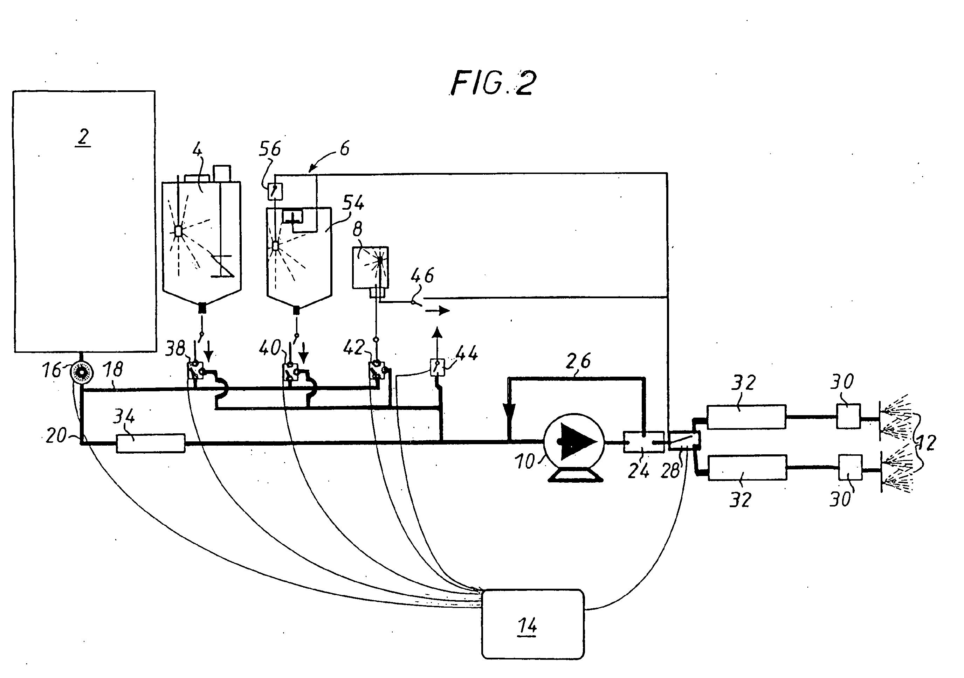

La figure 2 montre une variante de réalisation du pulvérisateur de la figure 1. Les modifications entre les deux formes de réalisation représentées au dessin se situent au niveau de la ligne d'injection 18 et des injecteurs. La figure 2 reprend les mêmes références que celles qui sont utilisées sur la figure 1 pour des éléments semblables.

La principale différence réside dans le choix d'injecteurs 38', 40' et 42' à trois voies en remplacement des injecteurs deux voies 38, 40 et 42. De ce fait, les injecteurs 36, 48 et 50 peuvent être abandonnés. Les injecteurs 38', 40' et 42' de la figure 2 comportent chacun deux entrées et une sortie. Un entrée est reliée à la sortie du débitmètre 16 tandis que l'autre entrée est reliée à la "cuve" 4 ou 8 de produit chimique correspondante ou au dispositif de rinçage. La sortie de chaque injecteur 38', 40' et 42' est quant à elle reliée au point de jonction 22 de la ligne d'injection 18 avec la ligne de charge 20. De préférence, un gicleur est prévu au niveau de la sortie de chaque injecteur ainsi qu'au niveau de l'entrée de produit chimique ou de liquide de rinçage. Ceci permet alors de mieux maîtriser le débit de produit chimique et de fluide porteur.

Dans cette forme de réalisation, les injecteurs 38', 40' et 42' laissent soit passer de l'eau en provenance de la cuve 2, soit du produit chimique (ou de rinçage) des cuves 4, 54 ou 8. Ces injecteurs ne peuvent pas prendre de position dans laquelle du produit chimique est mélangé en continu à de l'eau. La sortie de ces injecteurs est soit en liaison directe avec une entrée soit en liaison directe avec l'autre entrée.

Le dispositif de rinçage 6 permet de rincer l'emballage 8 de produit à pulvériser ainsi que la cuve secondaire 4 avant de réaliser une pulvérisation mais permet également de réaliser un rinçage final de tous les emballages et cuves vides de produits phytosanitaires en fin de pulvérisation.

Les deux figures montrent comment le dispositif de rinçage 6 est relié d'une part à l'aiguillage 28 et d'autre part à l'emballage 8. Bien entendu, une liaison non représentée au dessin dans un souci de clarté, est également établie avec la cuve 4 pour permettre le nettoyage de celle-ci.

Par le jeu d'ouverture et de fermeture des injecteurs 38, 40, 42 de la ligne d'injection 18, un premier rinçage de la cuve 4 et de l'emballage 8 est réalisé. La solution relativement concentrée issue de ce premier rinçage remplit la cuve 54 associée au dispositif de rinçage 6. Cette solution est alors répandue sur l'aire agricole tout en tenant compte de la concentration possible de produit afin de ne pas surdoser.

Une fois le bidon de rinçage 54 vide, une vanne de rinçage 56 placée en position haute de ce bidon, permet de nettoyer parfaitement l'ensemble du pulvérisateur.

Le boîtier électronique 14 gère toute cette procédure de nettoyage et guide l'utilisateur sur les actions qu'il a à entreprendre. En fin de procédure, le boîtier électronique 14 informe par l'intermédiaire de son interface de communication que le rinçage est terminé.

Bien entendu, la présente invention ne se limite pas à la forme de réalisation décrite et représentée, mais englobe toutes variantes d'exécution et/ou combinaisons de leurs divers éléments, dans le cadre des revendications ci-après.

Ainsi par exemple, le nombre d'injecteurs sur la ligne d'injection peut varier. Il est possible de prévoir de connecter sur la ligne d'injection uniquement des cuves dans lesquelles sont versés les produits à pulvériser ou bien uniquement des emballages d'origine. Le dispositif de couplage prévu entre un emballage de produit et l'injecteur correspondant est donné ci-dessus à titre d'exemple et peut être remplacé par tout autre dispositif permettant de prélever du produit dans l'emballage.

Pour créer une dépression entre la cuve principale et la pompe, il peut être envisager d'utiliser un dispositif autre qu'un clapet anti-retour. Un étranglement calibré ou bien une pompe permettant d'obtenir la différence de pression souhaitée peuvent aussi être utilisés.

La forme de réalisation décrite prévoit une rampe de pulvérisation comportant deux branches. Il est bien entendu possible de n'avoir qu'une rampe monobloc ou bien d'avoir plus de deux branches. Dans le cas décrit de deux branches, l'aiguillage comporte par exemple une vanne trois voies. S'il y a plus de branches, il est alors envisageable d'utiliser un aiguillage de type vanne électrique permettant de choisir la branche désirée. Dans le cas où il n'est pas nécessaire de choisir une branche, un simple clapet anti-retour peut être prévu sur chaque branche.

## Revendications

1. Dispositif de pulvérisation comportant une cuve principale (2) de produit porteur, au moins une cuve (4, 8) de produit chimique destiné à être mélangé au produit porteur, une rampe de pulvérisation (12) ainsi qu'une pompe (10) placée en aval de la cuve principale (2) permettant d'envoyer sous pression du produit porteur de la cuve principale vers la rampe de pulvérisation,
**caractérisé en ce que** des moyens (34) sont prévus pour créer une dépression calibrée entre la sortie de la cuve principale (2) de produit porteur et l'entrée de la pompe (10) et **en ce que** chaque cuve (4, 8) de produit chimique est connectée sur une ligne d'injection (18) se trouvant entre la cuve principale (2) de produit porteur et la pompe (10) par l'intermédiaire de moyens (38, 42) permettant l'injection dans cette ligne du produit chimique se trouvant dans la cuve de produit chimique correspondante.

2. Dispositif de pulvérisation selon la revendication 1, **caractérisé en ce que** les moyens prévus pour injecter le produit chimique dans la ligne d'injection présentent une sortie par laquelle sort par intermittence du produit chimique pur.

3. Dispositif de pulvérisation selon l'une des revendications 1 ou 2, **caractérisé en ce qu'**il comporte un réseau hydraulique présentant deux branches (18, 20) parallèles entre la cuve principale (2) de produit porteur et la pompe (10), une première branche (20) intégrant les moyens (34) permettant de créer la dépression calibrée et la seconde branche étant la ligne d'injection (18).

4. Dispositif de pulvérisation selon la revendication 3, **caractérisé en ce que** l'extrémité aval de la ligne d'injection (18) est relié à l'extrémité aval de la première branche (20) par deux injecteurs (48, 50) montés en parallèle, l'un des injecteurs (50) étant un injecteur possédant un orifice calibré.

5. Dispositif de pulvérisation selon l'une des revendications 1 ou 2, **caractérisé en ce qu'**il comporte un réseau hydraulique présentant deux branches (18, 20) parallèles entre la cuve principale (2) de produit porteur et la pompe (10), **en ce que** la première branche (20) intègre les moyens (34) permettant de créer la dépression calibrée, **en ce que** les moyens permettant l'injection de produit chimique se présentent à chaque fois sous la forme d'une vanne à deux entrées et une sortie, **en ce qu'**une entrée de chaque vanne est reliée au point amont de la seconde branche (18), **en ce que** la seconde entrée de chaque vanne est reliée à une cuve de produit chimique correspondante, **en ce que** la sortie de chaque vanne est reliée au point aval de la seconde branche (18) et **en ce que** la vanne est telle qu'elle laisse soit passer du fluide porteur, soit du produit chimique sans réaliser de mélange de ces produits.

6. Dispositif de pulvérisation selon l'une des revendications 1 à 5, **caractérisé en ce qu'**il comporte un dispositif de rinçage (6) intégré comportant une cuve de rinçage (56) munie d'une vanne de rinçage (56) et reliée d'une part à l'aval de la pompe (10) entre celle-ci et la rampe de pulvérisation (12), et à chaque cuve (4, 8) de produit chimique et d'autre part à la ligne d'injection (18) par l'intermédiaire d'un injecteur (40).

7. Dispositif de pulvérisation selon l'une des revendications 1 à 6, **caractérisé en ce qu'**au moins un homogénéisateur statique (32) est prévu en aval de la pompe (10).

8. Dispositif de pulvérisation selon l'une des revendications 1 à 7, **caractérisé en ce qu'**un débitmètre (16) est prévu à la sortie de la cuve principale (2).

9. Dispositif de pulvérisation selon l'une des revendications 1 à 8, **caractérisé en ce qu'**il comporte un dispositif de régulation (24) de la pression en aval de la pompe (10) et **en ce qu'**une conduite de retour (26) relie le dispositif régulateur de pression à un point situé en amont de la pompe (10) et en aval de la ligne d'injection (18).

10. Dispositif de pulvérisation selon l'une des revendications 1 à 9, **caractérisé en ce que** la ligne d'injection (18) est inclinée par rapport à l'horizontale.

11. Dispositif de pulvérisation selon l'une des revendications 1 à 10, **caractérisé en ce que** les moyens (38, 40, 42) permettant l'injection de produit chimique dans la ligne d'injection, d'éventuels capteurs (16, 52) et vannes (28) sont reliés à un boîtier électronique (14) qui gère l'ouverture et la fermeture des moyens d'injections et d'éventuelles vannes en fonctions des informations reçues d'une part par les éventuels capteurs et d'autre part par un utilisateur.

## Claims

1. A sprayer device including a main tank (2) for a carrier product, at least one tank (4, 8) for a chemical product intended to be mixed with the carrier product, a spray bar (12) and a pump (10) that is situated downstream of the main tank (2) for feeding the carrier product under pressure from the main tank to the spray bar,
**characterized in that** means (34) are provided to create a calibrated low pressure between the outlet of the main tank (2) for a carrier product and the inlet of the pump (10) and **in that** each tank (4, 8) for a chemical product is connected to an injection line (18) that is located between the main tank (2) for a carrier product and the pump (10) by means (38, 42) enabling injection into that line of the chemical product in the corresponding chemical product tank.

2. A sprayer device according to claim 1, **characterized in that** the means provided for injecting the chemical product into the injection line have an outlet from which the pure chemical product exits intermittently.

3. A sprayer device according to either claim 1 or claim 2, **characterized in that** it includes a hydraulic network having two parallel branches (18, 20) between the main tank (2) for a carrier product and the pump (10), a first branch (20) incorporating the means (34) for creating the calibrated low pressure and the second branch being the injection line (18).

4. A sprayer device according to claim 3, **characterized in that** the downstream end of the injection line (18) is connected to the downstream end of the first branch (20) by two injectors (48, 50) mounted in parallel, one injector (50) having a calibrated orifice.

5. A sprayer device according to either claim 1 or claim 2, **characterized in that** it includes a hydraulic network having two parallel branches (18, 20) between the main tank (2) for a carrier product and the pump (10), **in that** the first branch (20) incorporates the means (34) for creating the calibrated low pressure, **in that** the means for Injecting chemical product each take the form of a valve with two inlets and one outlet, **in that** one inlet of each valve is connected to the upstream point of the second branch (18), **in that** the second inlet of each valve is connected to a corresponding tank for a chemical product, **in that** the outlet of each valve Is connected to the downstream point of the second branch (18), and **in that** the valve is such that it allows either the carrier fluid or the chemical product to pass without mixing those products.

6. A sprayer device according to one of claims 1 to 5, **characterized in that** it includes an integral rinsing device (6) including a rinsing tank (56) that is provided with a rinsing valve (56) and connected on the one hand downstream of the pump (10) between the latter and the spray bar (12) and to each tank (4, 8) for a chemical product and on the other hand to the injection line (18) via an injector (40).

7. A sprayer device according to one of claims 1 to 6, **characterized in that** at least one static homogenizer (32) is provided downstream of the pump (10).

8. A sprayer device according to one of claims 1 to 7, **characterized in that** a flowmeter (16) is provided at the outlet of the main tank (2).

9. A sprayer device according to one of claims 1 to 8, **characterized in that** it includes a pressure regulator device (24) downstream of the pump (10) and **in that** a return pipe (26) connects the pressure regulator device to a point upstream of the pump (10) and downstream of the injection line (18),

10. A sprayer device according to one of claims 1 to 9. **characterized in that** the injection line (18) is inclined to the horizontal.

11. A sprayer device according to one of claims 1 to 10, **characterized in that** the means (38, 40, 42) for Injecting chemical product Into the injection line and any sensors (16, 52) and valves (28) are connected to an electronic module (14) which controls the opening and closing of the Injector means and any valves as a function of information received on the one hand by any sensors and on the other hand by a user.

## Patentansprüche

1. Zerstäubungsanordnung umfassend
ein Hauptgefäß (2) eines Trägerprodukts, mindestens ein Gefäß (4, 8) eines chemischen Produkts, das mit einem Trägerprodukt gemischt werden soll, eine Zerstäuberrampe (12) sowie eine Pumpe (10), die stromabwärts des Hauptgefäßes (2) angeordnet ist, die ein Zuführen des Trägerprodukts vom Hauptgefäß zur Zerstäuberrampe unter Druck ermöglicht, **dadurch gekennzeichnet,**
**dass** Mittel (34) vorgesehen sind, um eine kalibrierte Senke zwischen dem Austritt des Hauptgefäßes (2) eines Trägerprodukts und dem Eintritt in die Pumpe (10) bereitzustellen und dass jedes Gefäß (4,8) eines chemischen Produkts mit einer sich zwischen dem Hauptgefäß (2) eines Trägerprodukts und der Pumpe (10) befindenden Einspritzleitung (18) über Mittel (38, 42), die die Einspritzung des chemischen Produkts, das sich im entsprechenden Gefäß eines chemischen Produkts befindet, in diese Leitung ermöglichen, verbunden ist.

2. Zerstäubungsanordnung nach Anspruch 1, **dadurch gekennzeichnet, dass** die Mittel vorgesehen sind, um das chemische Produkt in die Einspritzleitung einzuspritzen, die einen Austritt aufweist, aus dem abwechselnd das chemisch reine Produkt austritt.

3. Zerstäubungsanordnung nach einem der Ansprüche 1 oder 2, **dadurch gekennzeichnet,**
**dass** diese ein hydraulisches Netz umfasst, das zwischen dem Hauptgefäß (2) eines Trägerprodukts und der Pumpe (10) zwei parallele Arme (18, 20) aufweist, wobei ein erster Arm (20) die Mittel (34) integriert, die es ermöglichen, die kalibrierte Senke bereitzustellen, und der zweite Arm die Injektionsleitung (18) darstellt.

4. Zerstäubungsanordnung nach Anspruch 3, **dadurch gekennzeichnet,**
**dass** das von der Einspritzleitung (18) stromabwärts liegende Ende mit dem vom ersten Arm (20) stromabwärts liegenden Ende durch zwei Injektoren (48,50), die parallel angebracht sind, verbunden ist, wobei einer der Injektoren (50) ein Injektor ist, der eine geeichte Öffnung aufweist.

5. Zerstäubungsanordnung nach einem der Ansprüche 1 oder 2, **dadurch gekennzeichnet,**
**dass** diese ein hydraulisches Netz umfasst, das zwei parallele Arme (18,20) zwischen dem Hauptgefäß (2) eines Trägerprodukts und der Pumpe (10) aufweist, wobei der erste Arm (20) die Mittel (34) integriert, die die Bereitstellung der kalibrierten Senke ermöglichen, wobei die Mittel, die die Einspritzung eines chemischen Produkts ermöglichen, sich bei jedem Mal In Form eines Verteilers bzw. Ventils mit zwei Eintritten und einem Austritt darstellen, ein Eintritt jeden Verteilers bzw. Ventils mit einem Punkt stromaufwärts des zweiten Armes (18) verbunden ist, der zweite Eintritt jedes Verteilers bzw. Ventils mit einem entsprechenden Gefäß eines chemischen Produkts verbunden ist, der Austritt jeden Verteilers bzw. Ventils mit einem Punkt stromabwärts des zweiten Armes (18) verbunden ist und der Verteiler bzw. das Ventil derart ist, dass dieses/dieser entweder flüssigen Träger oder chemisches Produkt passieren lässt ohne eine Mischung dieser Produkte zu realisieren.

6. Zerstäubungsanordnung nach einem der Ansprüche 1 bis 5, **dadurch gekennzeichnet,**
**dass** diese eine integrierte Spülanordnung (6) aufweist, die einen Spülbehälter (56) umfasst, der mit einem Spülverteiler bzw, -ventil (56) versehen ist und einerseits stromabwärts der Pumpe (10) zwischen dieser und der Zerstäuberrampe (12) mit jedem Behälter (4,8) eines chemischen Produkts und andererseits mit der Einspritzleitung (18) über einen Injektor (40) verbunden ist.

7. Zerstäubungsanordnung nach einem der Ansprüche 1 bis 6, **dadurch gekennzeichnet,**
**dass** mindestens ein statischer Homogenisator (32) stromabwärts der Pumpe (10) vorgesehen ist.

8. Zerstäubungsvorrichtung nach einem der Ansprüche 1 bis 7, **dadurch gekennzeichnet,**
**dass** ein Durchflussmesser (16) am Austritt des Hauptgefäßes (2) vorgesehen ist.

9. Zerstäubungsanordnung nach einem der Ansprüche 1 bis 8, **dadurch gekennzeichnet,**
**dass** diese eine Druckregelungsanordnung (24) stromabwärts der Pumpe (10) aufweist, und dass eine Rückleitung (26) die Druckregulationsanordnung an einem Punkt stromaufwärts der Pumpe (10) und stromabwärts der Einspritzleitung (18) verbindet.

10. Zerstäubungsanordnung nach einem der Ansprüche 1 bis 9, **dadurch gekennzeichnet,**
**dass** die Einspritzleitung (18) in Bezug auf die Horizontale geneigt ist.

11. Zerstäubungsanordnung nach einem der Ansprüche 1 bis 10, **dadurch gekennzeichnet,**
**dass** die Mittel (38, 40, 42), die das Einspritzen eines chemischen Produkts in die Einspritzleitung ermöglichen, etwaige Sensoren (16, 52) und Verteiler bzw. Ventile (28) mit einem elektronischen Gehäuse (14) verbunden sind, das das Öffnen und Schließen der Injektionsmittel und der etwalgen Verteiler bzw. Ventile als Funktion der erhaltenen Informationen einerseits durch die etwaigen Sensoren und andererseits durch einen Verwender steuert.
